# EUROPEAN PATENT APPLICATION

(11) **EP 4 420 978 A1**
(43) Date of publication of application: **28.08.2024**
(21) Application number: 23275033.1
(22) Date of filing: 24.02.2023
(51) Int. Cl.: B64C 27/24, B64U 10/10, B64U 30/21, B64U 50/13, B64C 3/38, B64C 3/44

(54) **A HYBRID AIR VEHICLE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention provides an air vehicle. The air vehicle comprises: a fuselage; a wing body and a pair of opposing wing members extending substantially laterally from the wing body; a stabiliser for generating force that, in use, counteracts torque exerted on the fuselage by the rotating wing body; a rotor mast for coupling the wing body to an upper side of the fuselage, wherein in a first configuration of the air vehicle the rotor mast is locked such that the wing body does not rotate relative to the fuselage and in a second configuration of the air vehicle the rotor mast is unlocked such that the wing body rotates relative to the fuselage; and propulsion means for providing linear thrust in the first configuration and for providing rotary thrust in the second configuration. The present invention also provides a method of controlling an air vehicle.

## Description

### FIELD

The present invention relates to an air vehicle, particularly an air vehicle able to transition between fixed-wing and rotary-wing flight modes, and a method of control thereof. More particularly but not necessarily exclusively, the present invention relates to an unmanned aerial vehicle (UAV) and method of control thereof.

### BACKGROUND

Aircraft which are able to transition from fixed-wing mode to rotary-wing mode by way of tiltrotor are becoming commonplace. An example of this is the Bell Boeing V-22 Osprey.

An aircraft with such capability is advantageous as they typically have the range of fixed-wing aircraft but the vertical take-off and landing (VTOL) capabilities of rotary-wing aircraft (e.g. helicopters).

One drawback of tiltrotor aircraft is the large size of the propellers needed to maintain rotary-wing flight makes ground clearance and approaching the aircraft a challenge when the wings are arranged horizontally for fixed-wing flight. Further, lift-to-weight inefficiency is present as the wings do not provide any lift during rotary-wing flight (e.g. hover), and thus the wing serves little purpose outside of cruise beyond fuel storage. The presence of the wings in the downwash of the rotors also reduces the lifting efficiency of the rotors.

Herein, rotary-wing flight is defined as where an aircraft generates lift by way of a rotating member such as a rotor blade; fixed-wing flight is the case where the aircraft generates lift by a wing member being driven forwards through the air, where the fuselage of the aircraft is fixed relative to that wing member.

Hybrid air vehicles, such as those described in EP3368413, are known. These aircraft have a main body integrated with a set of wings, where the main body and wings rotate together in rotary-wing mode to generate lift. Controlling these aircraft and incorporating systems therein is challenging. All internal payload, powertrain, and other components, must rotate at the same rate as the body in rotary-wing mode meaning that they must be designed to withstand strong rotational forces, and this also leads to poor fluid distribution. Therefore, there is a need for an improved aircraft capable of rotary-wing and fixed-wing flight that does not have a payload being subject to high rotational forces.

### SUMMARY

According to an aspect of the present invention, there is provided an air vehicle comprising: a fuselage; a wing body and a pair of opposing wing members extending substantially laterally from the wing body; a stabiliser for generating force that, in use, counteracts torque exerted on the fuselage by the rotating wing body; a rotor mast for coupling the wing body to an upper side of the fuselage, wherein in a first configuration of the air vehicle the rotor mast is locked such that the wing body does not rotate relative to the fuselage and in a second configuration of the air vehicle the rotor mast is unlocked such that the wing body rotates relative to the fuselage; and propulsion means for providing linear thrust in the first configuration and for providing rotary thrust in the second configuration.

Advantageously, an adaptable air vehicle is provided with relatively high fuel efficiency and forward speed, while also having the ability to take off and land vertically without a reduction in ground clearance or the need for electronic components able to withstand high rotational forces.

The fuselage may comprise a payload. The payload may be deployable.

The stabiliser may be arranged at one end of the fuselage. The stabiliser may be arranged at the rear end of the fuselage.

The propulsion means may comprise a motor for driving the rotor mast to rotate when the air vehicle is in the second configuration, and at least one motor for driving the air vehicle forward in flight when the air vehicle is in the first configuration.

The propulsion means may comprise a first propulsion device fixed to a first one of said pair of wing members and a second propulsion device fixed to a second one of said pair of wing members. In the first configuration, the first and second propulsion devices may provide thrust in the same direction as each other, and in the second configuration the first propulsion device may provide thrust in the opposite direction to the second propulsion device causing the wing body to rotate relative to the fuselage.

Each propulsion device may be a jet engine. Each propulsion device may comprise a propeller. For example, the propulsion devices may be turboprops, turbojets, or turbofans. The propulsion devices may comprise internal combustion engines or electrically-driven motors.

At least one of the pair of wing members may be arranged to rotate relative to the wing body about its central axis, such that in the second configuration of the air vehicle the leading edges of the pair of wing members face in substantially opposite directions. This may invert the direction of thrust of the respective propulsion device.

The first one of the pair of wing members may be rotatable about its central axis to provide a different angle of attack to that of the second one of the pair of wing members, such that the first one of the pair of wing members provides lift in the same direction as the second one of the pair of wing members when inverted for the second configuration. Alternatively, the profile of a first one of the pair of wing members may be configured to transition from a first shape when the air vehicle is in the first configuration to a second shape when the air vehicle is in the second configuration, such that both wing members generate lift in the same direction in the first configuration and the second configuration. The profile (i.e. cross-section) of the first one of the pair of wing members may be arranged to change so as to provide an effective aerofoil. The first one of the pair of wing members may comprise a metamorphic skin structure. The pair of wing members may be wing members having a low camber. The pair of wing members may each have symmetrical aerofoils.

The first propulsion device may comprise a reverse thrust mode, and in the second configuration of the air vehicle the first propulsion device may be configured to operate in the reverse thrust mode such that it provides thrust in the opposite direction to the second propulsion device.

Each propulsion device may comprise a propeller, and reversing mode may comprise reversing the direction of rotation of the propeller.

The stabiliser may be arranged to generate thrust along the lateral axis of the fuselage. The stabiliser may comprise a ducted fan. The stabiliser may be a NOTAR or Fenestron tail. The stabiliser may comprise a tail rotor. The stabiliser may be an engine exhaust.

The stabiliser may comprise a motor arranged to drive the fuselage to rotate relative to the wing body, to counter the rotation of the wing body when the wing body is driven to rotate by the first and second propulsion devices. The motor may be disposed inside the rotor mast. The motor may be disposed inside the fuselage to drive rotation of the rotor mast.

The stabiliser may comprise: a second wing body and a second pair of opposing wing members extending substantially laterally from the second wing body; a third propulsion device fixed to a first one of said pair of second wing members and a fourth propulsion device fixed to a second one of said second pair of wing members; and a second rotor mast for coupling the second wing body to the upper side of the fuselage, wherein in the first configuration of the air vehicle the second rotor mast is locked such that the second wing body does not rotate relative to the fuselage and in the second configuration of the air vehicle the second wing body rotates relative to the fuselage, wherein in the first configuration the third and fourth propulsion devices provide thrust in the same direction as each other, and wherein in the second configuration the third propulsion device provides thrust in the opposite direction to the fourth propulsion device causing the second wing body to rotate relative to the fuselage, wherein the first and second wing members are arranged to intermesh with the third and fourth wing members in the second configuration.

The air vehicle may comprise at least one tail fin extending away from the lower side of the fuselage. Alternatively, the air vehicle may comprise at least one tail fin extending away from the upper side of the fuselage. The at least one vertical tail fin may be coupled to the fuselage by a horizontal stabiliser. The tail fin may be arranged vertically.

The air vehicle may comprise a horizontal tail surface for controlling the pitch of the air vehicle.

The pair of wing members may be arranged to pivot simultaneously about their longitudinal axes to increase lift when the air vehicle transitions from the first configuration to the second configuration.

The air vehicle may comprise a swash plate for controlling the wing body when the air vehicle is in the second configuration, the swash plate comprising: a frame arranged to be driven to travel up and down a plurality of legs extending from a fuselage, the frame being mounted such that it can rotate relative to the fuselage; and a pair of connecting rods for coupling the frame to the pair of wing members, the pair of connecting rods being coupled at their bottom end to the frame and at their top end to the wing members, wherein a bottom end of at least one of the connecting rods is arranged to slide along one side of the frame.

The air vehicle may comprise a rotor brake for locking the wing body in place relative to the fuselage in the first configuration of the air vehicle.

The air vehicle may be an unmanned aerial vehicle. Alternatively, the air vehicle may be a manned or optionally manned aerial vehicle.

According to a second aspect of the present invention, there is provided a method of controlling an air vehicle according to the preceding aspect to transition from fixed-wing mode to rotary-wing mode, comprising: rotating both wing members upwards such that they are arranged orthogonal to the horizontal plane of the air vehicle; further rotating one of the pair of wing members backwards such that its leading edge faces away from the front of the fuselage, and returning the other one of the pair of wing members back to its original position such that the propulsion devices provide thrust in opposite directions; and activating the stabiliser.

The method may comprise controlling the air vehicle to enter a shallow dive while maintaining full power to the propulsion devices to provide linear thrust in the direction of travel.

### BRIEF DESCRIPTION OF THE FIGURES

Embodiments of the invention will now be described by way of example only with reference to the Figures, in which:
Figure 1 shows a perspective view of an aircraft according to an embodiment;
Figures 2a and 2b are perspective views of a rotor hub according to an embodiment, where Figure 2a shows the rotor hub in cutaway;
Figure 3a shows a frontal view of a swash plate according to an embodiment;
Figure 3b shows a perspective view of a swash plate according to an embodiment;
Figure 4 shows a schematic view of a swash plate according to an embodiment;
Figure 5 shows an aircraft transitioning from rotary-wing mode to fixed-wing mode in a process according to an embodiment;
Figure 6 shows an aircraft transitioning from fixed-wing mode to rotary-wing mode in a process according to an embodiment;
Figures 7a and 7b are plan views of a wing section of an aircraft according to an embodiment, respectively in fixed-wing mode and rotary-wing mode;
Figures 8a and 8b are cross sectional views through a wing of an aircraft according to an embodiment;
Figures 9a and 9b are plan views of a wing section of an aircraft according to another embodiment, respectively in fixed-wing mode and rotary-wing mode;
Figure 10 shows a perspective view of an aircraft according to another embodiment; and
Figure 11 shows a perspective view of an aircraft according to another embodiment.

For convenience and economy, the same reference numerals are used in different Figures to label identical or similar elements.

### DETAILED DESCRIPTION

Generally, embodiments relate to a hybrid air vehicle comprising wing members that operate to provide lift either in a fixed-wing mode (i.e. where the air vehicle is configured for fixed-wing flight) enabling efficient forward flight, or rotary-wing mode (i.e. where the air vehicle is configured for rotary-wing flight) enabling vertical take-off and landing as well as rearward flight. A stabilised fuselage is coupled to the wing members and does not rotate along with them in rotary-wing mode. Therefore, the hybrid air vehicle has advantages of fixed-wing aircraft, such as range, maximum payload mass and ground clearance, and advantages of rotary-wing aircraft such as an ability to hover and take off from confined spaces. Any payload within or attached to the fuselage would not be subject to high rotational forces, and the air vehicle is thus a stable platform in both flight modes. Further, storage requirements of the air vehicle are reduced as the wing members may be aligned co-axially with the fuselage when the air vehicle is not in use (in other words, the footprint of the air vehicle can be reduced for storage).

Generally throughout this specification, "hybrid" means the air vehicle is adaptable (i.e. transformable) to operate in different flight modes; it does not refer to the type of fuel the air vehicle uses.

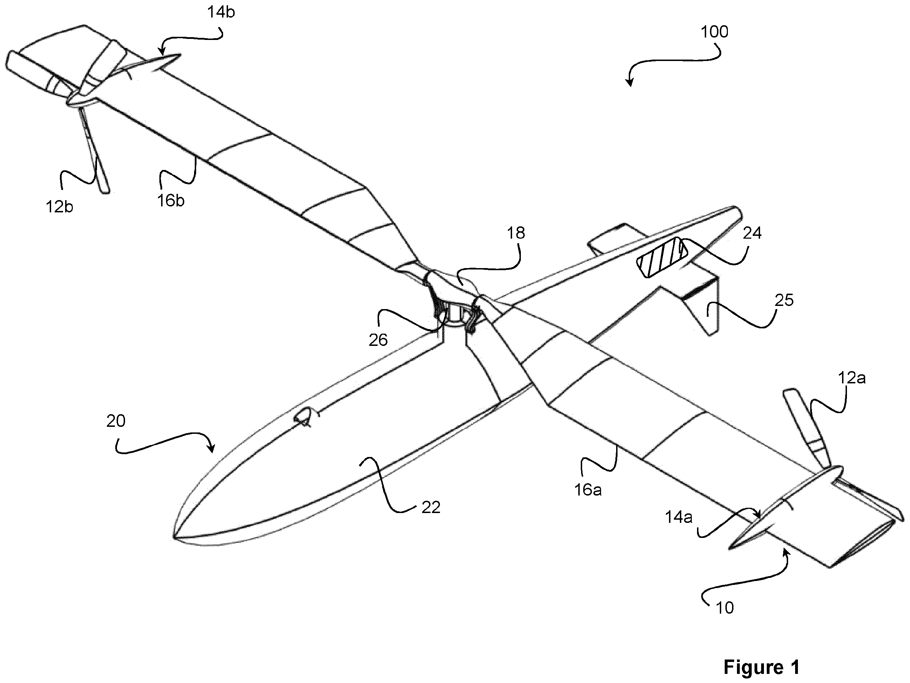

Figure 1 illustrates an aircraft 100 (i.e. an air vehicle) according to embodiments. The aircraft 100 is a hybrid air vehicle operable in two modes: fixed-wing and rotary-wing. The aircraft 100 is generally formed of two sections, the wing section 10 and the main body 20. The wing section 10 is rotatably coupled to (i.e. can rotate relative to, but is connected to) the main body 20. While an aircraft 100 for performing a role such as equipment transport or surveillance is depicted, the invention may also be embodied in other air vehicles such as a guided missile or personal air mobility vehicle.

The main body 20 includes a fuselage 22. The fuselage 22 comprises a payload. The payload may include intelligence gathering systems, such as photography equipment, LiDAR, infrared sensors, hyperspectral imaging systems, RADAR and/or sonar equipment. The payload may also be deployable, such as a weapon or a crate of supplies. The payload may be contained in a bay within the fuselage 22, with the bay having openable doors. The fuselage 22 also comprises communication, navigation and control equipment for allowing the aircraft 100 to be remotely piloted. While the aircraft 100 shown here is unmanned, the aircraft 100 may be manned or optionally manned.

While not shown, the main body 20 also comprises landing gear such as wheels, skids or a floatation device.

The main body 20 comprises an empennage 25 for controlling the pitch and yaw of the aircraft 100 in fixed-wing flight. The empennage 25 illustrated here comprises two tail fins projecting ventrally, coupled to the fuselage 22 by a horizontal stabiliser. The horizontal and vertical tails provide pitch and yaw stability in cruise mode (i.e. fixed-wing mode). Ventral-mounted tail fins are advantageous as they are less likely to infringe on the rotation of the wing section 10. However, embodiments are not limited to the design set out in Figure 1, and in alternative embodiments the tail fin(s) may be mounted dorsally. The aircraft 100 may comprise one or more tail fins. The tail fin(s) may be arranged vertically as illustrated in Figure 1. Alternatively, the tail fin(s) may be arranged at an angle relative to the horizontal plane of the aircraft 100. For example, the aircraft 100 may comprise a V-shaped tail structure.

To stabilise the aircraft 100 in rotary-wing mode and during transition between flight modes, the main body 20 comprises an anti-torque device 24. In this case, the anti-torque device 24 is a laterally-blowing enclosed ducted fan. In other words, the fan controls lateral rotation of the fuselage 22. The anti-torque device 24 serves the purpose of countering the reactionary torque exerted on the fuselage 22 introduced by the rotation of the wing section 10. The anti-torque device 24 directs thrust in the same direction as the wing section's rotation. Alternatively, the anti-torque device 24 may comprise an engine exhaust, tail rotor or Fenestron tail. The anti-torque device 24 may be smaller and lighter than those typically associated with helicopters due to the aircraft 100 not having to contend with the high torque associated with driving the rotor (wing section 10).

The anti-torque device 24 also provides stability to the aircraft 100 in crosswinds, side loads, and manoeuvres.

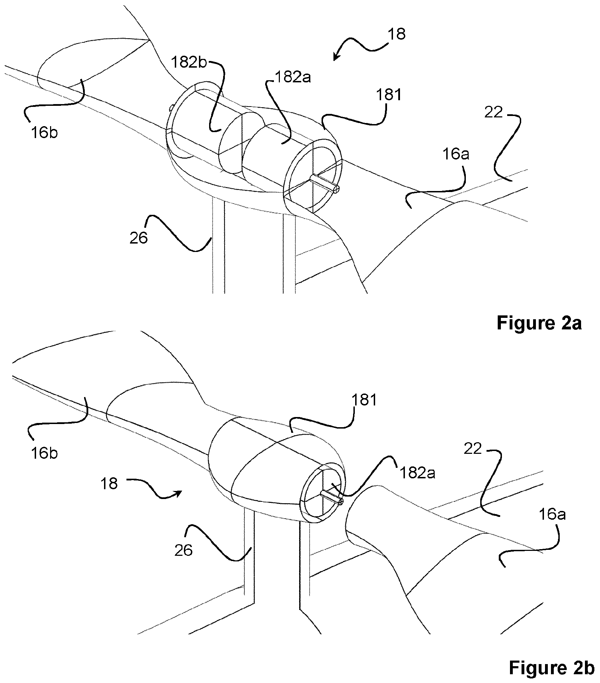

The wing section 10 comprises a pair of wing members 16a, 16b (generally 16). The wing members 16 may alternatively be referred to as rotor blades, as they operate as wings when the aircraft 100 is in fixed-wing mode and rotors when the aircraft 100 is in rotary-wing mode. The wing members 16 are preferably of a low camber, for example symmetrical or semi-symmetrical, such that they can remain effective aerofoils when substantially inverted. The wing members 16 are coupled together by a rotor hub 18. The rotor hub 18 will now be described in more detail with reference to Figures 2a and 2b.

The rotor hub 18 comprises a housing 181. In one embodiment, at least one of the wing members 16a is arranged to rotate (i.e. pitch) relative to the opposing wing member 16b by way of a powered actuator 182a, 182b (generally 182) disposed inside the housing 181. The actuators 182 may be electrically-driven motors that directly interface with a structure on the inside of the wing member root. The motors and the inside of the wing member 16 may function as a rack and pinion.

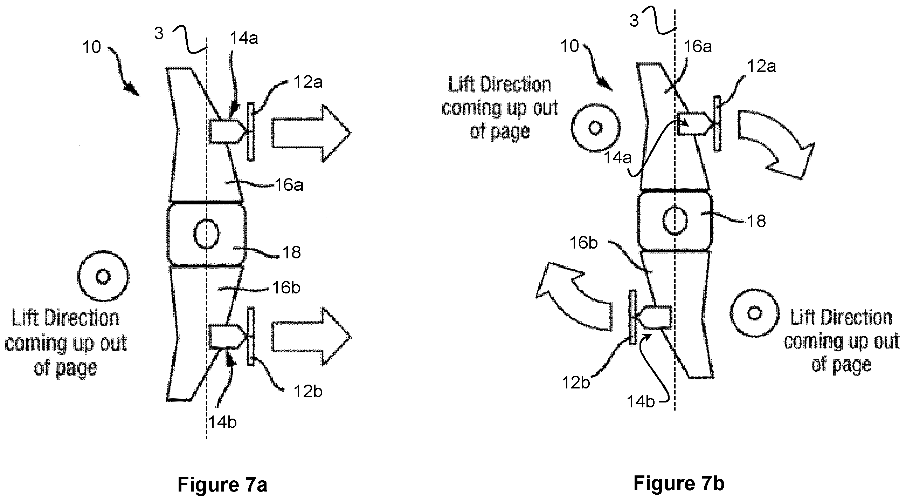

One wing member 16a is arranged to rotate through at least 180 degrees such that its leading edge can be arranged to face either the front or the rear of the aircraft 100. The axis of rotation 3 of the wing member 16a is illustrated in Figures 7a and 7b. In fixed-wing mode, both wing members 16a, 16b are driven into airflow simultaneously from the same direction, and therefore to create lift the leading edges need to face that oncoming airflow. In rotary-flight mode, the wing members 16a, 16b are driven into airflow in opposing directions i.e. one wing member 16a is pushed toward the front of the aircraft 100 while the other wing member 16b is pushed towards the rear. Therefore, in rotary-wing mode the wing members 16a, 16b need to generate lift while facing in opposite directions and so their leading edges need to face in opposite directions.

In the depicted embodiment, both wing members 16 are capable of being independently inverted by respective actuators 182a, 182b. In an alternative embodiment, only one wing member 16 is arranged to be completely invertible.

The rotor hub 18 is coupled to a rotor mast 26 protruding from the dorsal side of the fuselage 22. The rotor mast 26 may alternatively be referred to as a drive shaft, particularly where it is powered. The rotor mast 26 is lockable, such that it may either fix the wing section 10 in position relative to the fuselage 22 or allow the wing section 10 to rotate relative to the fuselage 22. That is to say, in one embodiment the rotor hub 18 is selectively fixed to or rotates about the rotor mast 26 to allow the wing members 16 to rotate. In an alternative embodiment, the rotor hub 18 is fixed to the rotor mast 26, with the rotor mast 26 being selectively fixed (i.e. locked) or driven to rotate relative to the fuselage 22 to allow the wing members 16 to rotate.

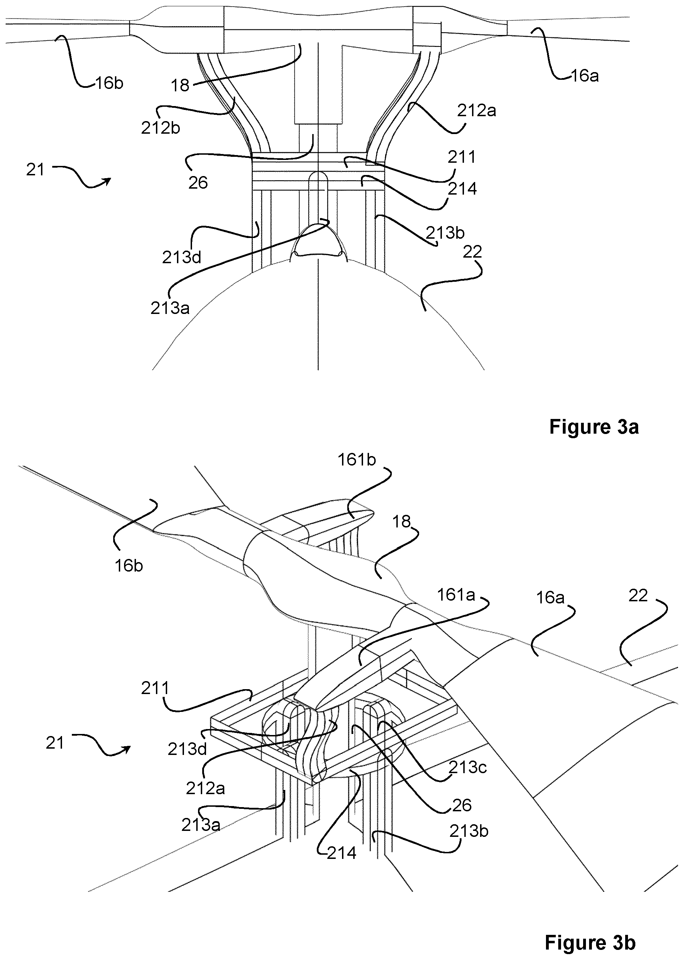

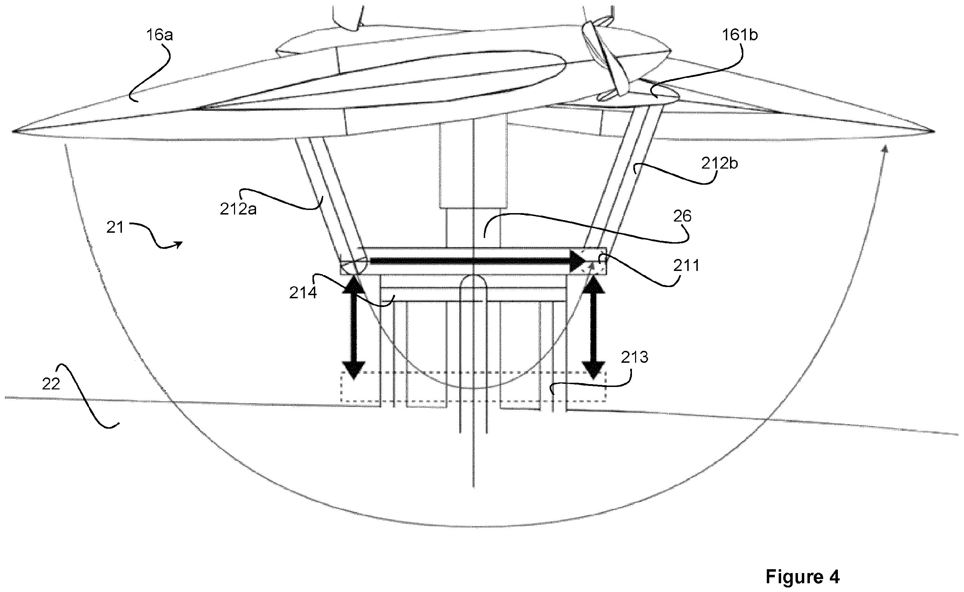

For clarity in the drawing, a swash plate 21 for controlling the tilt and pitch of the wing section 10 has not been fully shown in Figure 1 and Figures 2a and 2b. This will be described later in more detail with reference to Figures 3a, 3b and 4.

In fixed-wing mode, the aircraft 100 may be controlled by control surfaces on the wing members 16. For example, roll may be controlled using ailerons on the trailing edges of the wing members 16. Lift may be modified using flaps or slats inboard of the ailerons. In alternative embodiments, roll may be controlled by increasing the lift of one wing member 16 relative to the other by controlling the relative pitch of the wing members 16 using the actuators 182. In other words, roll of the aircraft 100 may be controlled by changing relative the angle of attack of the wing members 16 i.e. the aileron function is provided by an all-moving wing member 16. The lift generated by the whole wing section 10 may be controlled by pitching both wing members 16 upwards relative to the horizontal plane. In an alternative embodiment again, aircraft 100 roll may be controlled by tilting the wing section 10 relative to the rotor mast 26, such that one wing member 16 is higher relative to the fuselage 22 than the other.

Electrical power and motor control signals for the actuators 182 and (where present) control surfaces on the wing members 16 are transferred from batteries and a processor in the fuselage 22 to the powered actuators 182 in the rotor hub 18 through the rotor mast 26 and servo hinges via sliding contacts.

Returning now to Figure 1. In the illustrated embodiment, the wing members 16 are driven to rotate about the fuselage 22 by propulsion units 14a, 14b (generally 14) attached thereto. This may be achieved by the propulsion units 14 providing thrust in opposite directions to each other either by being made to face in opposite directions or by one propulsion unit 14 operating in reverse. However, in an alternative embodiment, a propulsion unit located in or on the fuselage 22 is used to directly drive the wing section 10 to rotate when in rotary-wing mode. In other words, an electric motor may be installed within the fuselage 22 or a fairing thereof, which drives the wing section 10 to rotate via the rotor mast 26. The direct drive propulsion unit for the wing section 10 may alternatively comprise an internal combustion engine or a jet engine. The fuselage 22 may further comprise the fuel (e.g. batteries) to power the direct-drive propulsion unit. In this embodiment, the propulsion units 14 provide the aircraft 100 with forward thrust in fixed-wing mode.

As illustrated, the propulsion units 14a, 14b each comprise respective propellers 12a, 12b. The propulsion units 14 may be integrated with or embedded within respective wing members 16. Alternatively, the propulsion units 14 may comprise nacelles or pods that are affixed or otherwise coupled to the respective wing members 16.

The propulsion units 14 may comprise a jet engine, internal combustion engine, or electrically-driven motors. The propulsion units 14 may be turboprops or turbojets. The propulsion units 14 may be powered by a store of fuel, such as a hydrogen fuel cell, a battery, or flammable liquid. The fuel may be stored in the wing members 16. Alternatively, the fuel may be stored within the fuselage 22. Alternatively again, the fuel may be stored within the propulsion units 14.

The propulsion units 14 are located towards the wing-tip end of each wing member 16. They generate opposing thrust and a resultant torque to power the main rotor (i.e. the wing section 10) in rotary-wing mode.

In the alternative embodiment, where the rotation of the wing section 10 is directly driven by a motor in the main body 20, the propulsion units 14 for providing linear forward thrust in fixed-wing mode may not be located on the wing members 16. Instead, the propulsion units 14 may be located on the main body 20, for example on stub wings or on the empennage. There may only be a single propulsion unit 14 (in addition to that driving rotation of the wing section 10) in this embodiment, such as a pusher propeller or a jet engine arranged co-axially with the longitudinal axis of the fuselage 22.

The use of the propulsion units 14 as described above makes the aircraft 100 better optimised for both stages of flight independently than a traditional tiltrotor aircraft. In a tiltrotor aircraft, the propellers are used for both hover and cruise so need to configured to compromise for both stages. The wing tip propellers 12 are designed to operate at high speed and low thrust, whereas the main rotor/wing section 10 is designed to operate at low speed and high thrust in rotary-wing mode.

In an alternative embodiment, not requiring an anti-torque device 24 for generating lateral thrust, the fuselage 22 may be gyroscopically yaw-stabilised by applying a corrective torque at the rotor mast 26. Here, the wing section 10 is driven to rotate about the axis of rotor mast 26 by the propulsion devices 14 affixed to the wing members 16.

Consider that under stable hover conditions the rotor (wing section 10) maintains a constant angular velocity. The angular external aerodynamic and internal mechanical forces acting on the fuselage 22 may be offset by driving the rotation of the fuselage 22 with an opposite torque through a motor positioned in the fuselage 22, acting on the rotor mast 26 (or vice versa). An electric DC motor would be well suited to this application as it could be capable of applying the necessary torque at a wide range of speeds in both directions of rotation. It could even re-generatively charge batteries whilst applying a torque opposite to the direction of motion.

This could lead to small adverse effects on the angular velocity of the main rotor (wing section 10) which may be corrected by altering power to the wing tip propulsion units 14. This, in turn, may lead to small adverse effects to the angular velocity of the fuselage 22. This a continuous cycle of diminishing effects as the majority of aerodynamic energy is dissipated to the free-stream flow and not captured by the fuselage 22 as angular velocity. Such a cycle could be accounted for by an appropriately tuned control system.

Mechanical control of the wing section 10, particularly in rotary-wing mode, will now be described with respect to Figures 3a, 3b and 4.

A swash plate 21 is provided between the rotor hub 18 and the fuselage 22. The swash plate 21 comprises a frame 211, a circular support 214 and connecting rods 212a, 212b (generally 212). The frame 211 comprises a front member and a rear member, connected together by two side members. The frame 211 may form a rectangle or a square.

The frame 211 is suspended above the fuselage 22 by a plurality of legs 213 extending from the fuselage 22. Four legs 213 are illustrated, but it would be appreciated there may be more than or fewer than four legs 213. The legs 213 are shown as discrete elements, but in an alternative embodiment the legs 213 are provided as continuous surfaces i.e. plate-like structures extending upwards from the fuselage 22. The frame 211 is arranged to travel up and down the legs 213. The frame 211 may be pneumatically or hydraulically driven to travel (i.e. slide) up and down the legs 213. Alternatively, the frame 211 may be coupled to electric motors to drive it up and down the legs 213.

The frame 211 is coupled to the upper side of a circular support 214, which is slidably coupled to the legs 211. The circular support 214 is coupled to the legs 211 by a bearing track, such that it can rotate around the legs 211 (i.e. it rotates along with the wing section 10, to which it is coupled via the connecting rods 212 and the frame 211), thereby causing the frame 211 to rotate relative to the legs 213 and the fuselage 22.

Two legs 213a, 213c are aligned with the longitudinal axis of the fuselage 22, one in front of the rotor mast 26 and one behind. Meanwhile a leg 213b, 213d is arranged on either side of the longitudinal axis of the fuselage 22, in parallel with the rotor mast 26.

The frame 211 is connected to the first wing member 16a by a first connecting rod 212a, and to the second wing member 16b by a second connecting rod 212b. The connecting rods 212 couple to the wing members 16 at respective protruding portions 161 at the root of the wing members 16. The protruding portions 161 extend from the leading edge of the respective wing members 16 and extend in the horizontal plane of the wing members 16. The connecting rods 212 are hinged at both ends, such that they can rotate relative to both the frame 211 and the wing members 16. In another embodiment, the connecting rods 212 only pivot relative to an axis of the frame 211.

When the wing members 16 are configured for rotary-wing mode, the bottom end of the first connecting rod 212a is positioned towards the front of the frame 211, while the bottom end of the second connecting rod 212b is positioned towards the rear of the frame 211. When the wing members 16 are configured for fixed-wing mode, the bottom ends of the connecting rods 212 are co-axial within the frame 211.

As illustrated in the Figures, the bottom ends of the connecting rods 212, i.e. those closer to the fuselage 22 when the wing members 16 are aligned with the horizontal plane, are pivotably connected to the frame 212. The top ends of the connecting rods 212, i.e. those further away from the fuselage 22 when the wing members 16 are aligned with the horizontal plane, are connected to the wing members 16 such that they are driven to pivot by the rotation of the wing members 16 by the actuators 182.

In Figures 3a, 3b and 4, the wing members 16 are shown as being inverted relative to each other, where the leading edges face in opposite directions. In other words, these Figures demonstrate the wing section 10 configured for rotary-wing mode.

By sliding the frame 211 down the front leg 213a but not the rear leg 213c, the whole wing section 10 is pivoted forwards to change angle of attack of the wing members 16. Likewise, by sliding the frame 211 down the rear leg 213c but not the front leg 213a, the whole wing section 10 is pivoted backwards to change angle of attack of the wing members 16. The wing section 10 can be tilted left or right relative to the fuselage 22 by sliding the frame 211 down a respective side leg 213b, 213d. This allows the pitch and roll of the aircraft 100 to be controlled in rotary-wing mode.

The connecting rods 212 are arranged to slide along the side members of the frame 211. As illustrated in Figure 3b the connecting rods 212 may be curved, such as in an S-shape. As illustrated in Figure 4, the connecting rods 212 may be straight.

The process of inverting a wing member 16a from facing towards the rear of the aircraft 100 to the front will now be described with reference to Figure 4.

Firstly, collective is gradually increased. This lowers the swash plate 21 (i.e. moves the frame 211 equally down the legs 211) and begins to twist the wing members 16 anticlockwise about their longitudinal axes such that they both face upwards (i.e. with the leading edges of the wing members 16 facing away from the fuselage 22). This increases lift, propelling the aircraft 100 upwards.

Collective is then increased beyond wing member 16 (i.e. blade) stall. In other words, the actuators 182 are driven to rotate both wing members 16 relative to the rotor hub 18, i.e. about their longitudinal axes. This continues to turn both wing members 16 around until they are arranged approximately vertical, i.e. where the horizontal plane of the wing members 16 is arranged approximately orthogonally to the horizontal plane of the fuselage 22. The wing members 16 are now at high alpha leading to high drag and little lift. This decelerates the rotation of the rotor (i.e. the wing section 10).

The position of the connecting rod 212a coupled to the wing member 16a is then reversed by sliding one end of it along the side member of the frame 211. This may be achieved by an electrically-driven servo motor, hydraulics or pneumatics. Alternatively, the connecting rod 212a may be spring-loaded and is pulled across the side member of the frame 211 when a locking member is released. Alternatively again, the connecting rod 212a may be driven to slide across the side the member of the frame 211 by rotation of the actuator 182 in the rotor hub 18. A catch or other locking member may be used to selectively retain or release the end of the connecting rod 212a to enable it to slide.

A rotor brake is then applied and the rotor mast 26 is locked to the fixed-wing mode position i.e. such that the wing section 10 cannot rotate about the axis of the rotor mast 26. Some reactive anti-torque may be required from the anti-torque device 24 to stabilise the aircraft 100.

The collective is then lowered to re-align both wing members 16 with the incident airflow i.e. by rotating them about their longitudinal axes using the actuators 182. The position of one wing member 16a has thus been reversed to mirror the opposite wing member 16b. Both wing members 16 now face in the same direction.

The aircraft 100 loses lift temporarily during the transition so this should be re-gained by increasing forward thrust.

This process can then be effectively reversed to transition the wing section 10 from fixed-wing mode to rotary-wing mode.

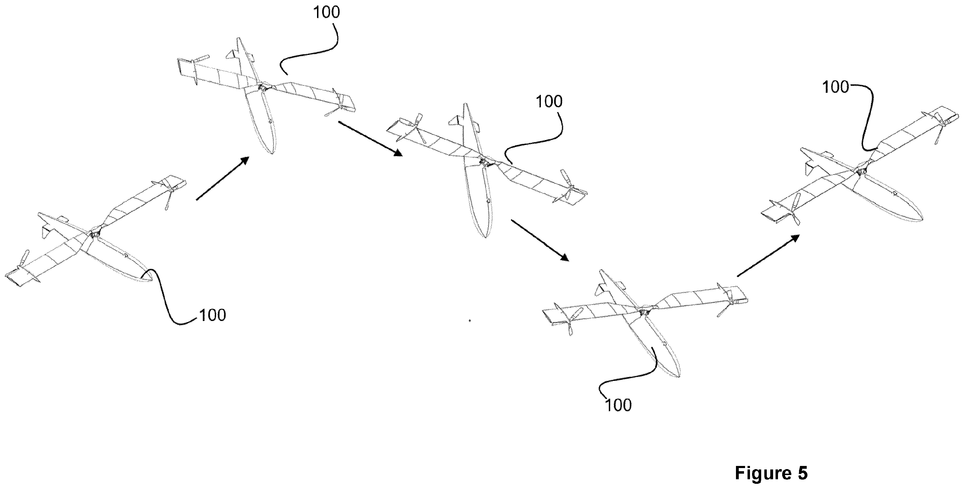

A method of controlling an aircraft 100 to transition from rotary-wing mode to fixed-wing mode will now be described with reference to Figure 5. More detail on wing member 16 articulation is achieved is described above with reference to Figure 4. Transition from rotary-wing mode to fixed-wing mode is achieved while the aircraft 100 is airborne.

As can be seen in the image at the far left hand side of Figure 5, in rotary-wing mode the propulsion units 14a, 14b on the wing members 16 face in opposite directions to each other so as to provide thrust in opposing directions (i.e. with thrust being directed toward the front of the aircraft 100 by one propulsion unit 14b and with thrust being directed toward the rear of the aircraft 100 by the other propulsion unit 14a).

The aircraft 100 is then controlled to enter a nose-down attitude (i.e. a dive). The 0g pushover tends to neutralise rotor (i.e. wing section 10) loading. The power generated by the propulsion units 14 is reduced, where these are causing the rotor (i.e. the wing section 10) to rotate. As described above, in an alternative embodiments the rotor (i.e. the wing section 10) may be directly driven to rotate by a motor within the fuselage 22, and so in these embodiments at the same stage in the process power produced by it is reduced to slow the rotation of the rotor (i.e. the wing section 10).

Both wing members 16 are then arranged to pivot upwards, such that the plane of the wing members 16 is orthogonal to the horizontal plane (i.e. the plane that bisects the fuselage 22). In other words, the angle of attack of the wing members 16 is increased by rotating them both through 90 degrees. This provides rotor aero braking to slow and ultimately stop the rotation of the wing section 10, along with slowing the descent of the aircraft 100 in the dive.

When the reactionary torque generated by the rotor (i.e. the wing section 10) has substantially diminished, the anti-torque device 24 (i.e. the fan) is switched off. The fuselage 22 is locked to the wing section 10 such that the wing section 10 cannot rotate. The wing section 10 is locked in the configuration whereby the longitudinal axes of the wing members 10 is orthogonal to the longitudinal axis of the fuselage 22. In other words, the wing members 16 are rotated such that their leading edges face the intended direction of travel of the aircraft 100 and fixed in place. As such, linear thrust can then be provided by the propulsion units 14.

Forward power is then provided by the propulsion units 14 while the aircraft 100 is still in the dive in order to generate lift using the wing members 16.

The aircraft 100 is then pitched back up for straight and level flight.

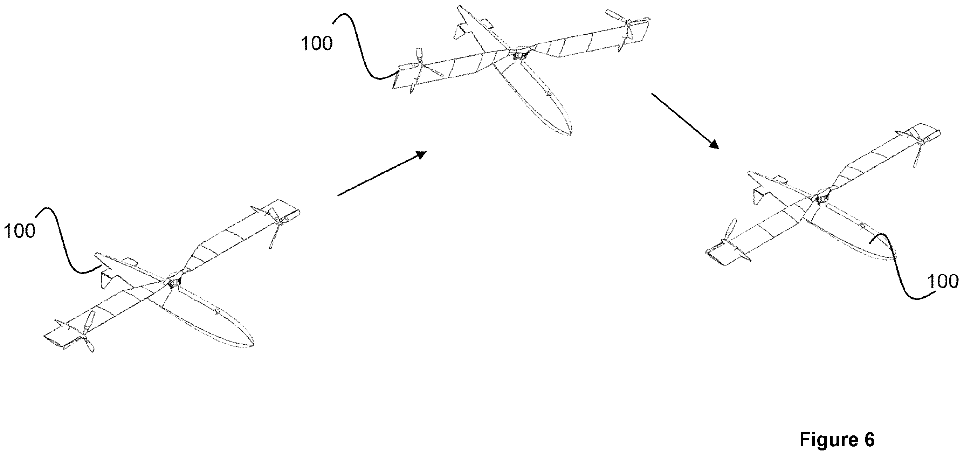

A method of controlling an aircraft 100 to transition from fixed-wing mode to rotary-wing mode will now be described with reference to Figure 6. This is achieved while the aircraft 100 is airborne.

Firstly, the aircraft 100 is controlled to enter a shallow dive. The wing members 16 are both rotated upwards by about 90 degrees to present a large surface area to oncoming airflow. In other words, the angle of attack of the wing members 16 is substantially increased. The wing members 16 are arranged such that their plane is orthogonal to the horizontal plane of the aircraft 100. This effectively stalls the wing members 16, while full power is maintained by the propulsion units 14 on the wing members 16.

One of the wing members 16a is rotated backwards by another 90 degrees such that its leading edge faces away from the front of the fuselage 22, while the other wing member 16b is rotated back to its normal orientation with the leading edge facing the front of the fuselage. The anti-torque device 24 is activated to provide lateral stability to the fuselage 22.

The wing section 10 (now a rotor) then starts to rotate quickly to generate lift and the aircraft 100 begins to hover. The rotation may be driven by a direct drive propulsion unit within the fuselage, or alternatively the propulsion units 14 on the wing members 16 being driven to provide thrust in opposite directions.

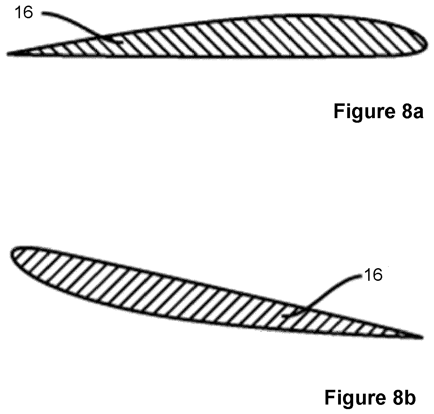

Figures 7a and 7b illustrate, in plan view, the difference in configuration of the wing section 10 between fixed-wing mode and rotary-wing mode. There are a number of envisaged mechanisms to maintain lift on the wing member 16b that has been inverted acting in the same direction as the lift on the wing member 16a that has not been inverted. This is further explained with reference to Figures 8a and 8b.

Figure 8a shows a wing member 16 designed to act as an effective aerofoil if it is travelling from the left hand side of the page to the right hand side. An aerofoil is effective where air travels over its upper surface (i.e. that facing away from the ground) faster than the air over its lower surface, so that a region of low pressure develops above the wing member 16. This lift generated by the wing member 16 is counteracted by the weight of the wing member 16 and any other load acting on it. The wing member 16 demonstrated is not symmetrical, but a symmetrical wing member 16 would still generate lift upwards if pivoted to an appropriate angle of attack by the respective actuator 182.

When the aircraft 100 enters rotary-wing mode, the wing member 16 is inverted and is driven to rotate such that in one half of the cycle it is pushed towards the rear of the aircraft 100 and in the other half of the cycle it is pushed towards the front of the aircraft 100. The leading edge of the wing member 16 still strikes oncoming airflow before the trailing edge, but the lift would generally be acting to drop the wing member 16 owing to the area of low air pressure being generated beneath the wing member 16. Although the wing member 16 would not be performing optimally, one technique to counter this would be to change the angle of attack of the wing member 16 such that a greater surface area of lower surface of the wing member 16 is presented to on-coming airflow. This is illustrated in Figure 8b. In other words, the wing member 16 may be inverted by about 185 to 210 degrees, instead of 180 degrees, such that it is tilted upwards into the airflow into which it is driven. This method is particularly effective on a wing 16 of low camber, for example a symmetrical wing.

Alternatively, the wing member 16 may be modifiable in shape in order to maintain an effective aerofoil profile regardless of orientation. This may be achieved be flaps, slats, ribs or other mechanical devices. Alternatively, the surfaces of the wing member 16 may be flexible. Here, inflatable bags or extendable ribs or pistons may be used to mould the surfaces of the wing member 16 to present an effective aerofoil. The wing member 16 may be a metamorphic wing.

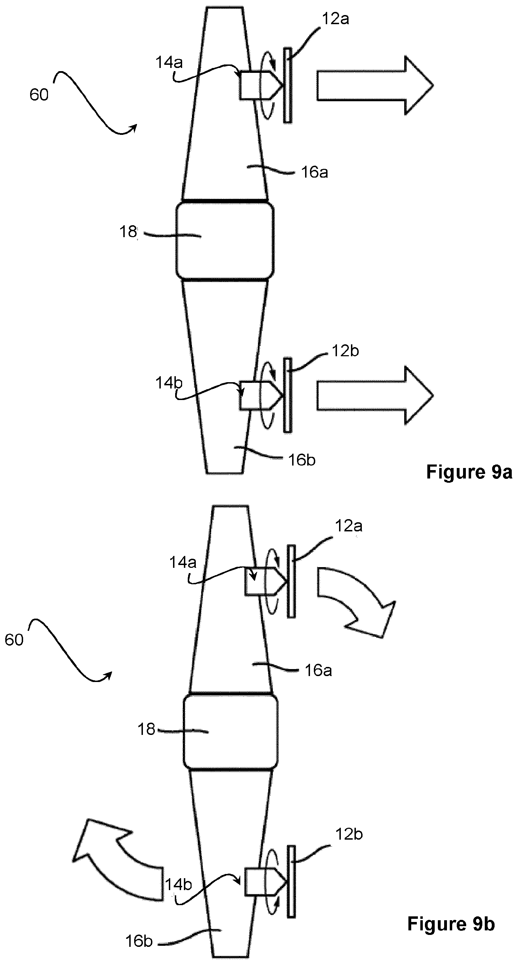

As illustrated in Figures 9a and 9b, the propulsion units 14 may be equipped with a reverse-thrust feature. For example, the propeller 12 on at least one of the propulsion units 14 may be arranged to be selectively driven both clockwise and anticlockwise such that thrust may be generated in two opposing directions. By reversing the direction of thrust of a first propulsion unit 14a but not the second propulsion unit 14b when the aircraft 100 is operating in fixed-wing mode, the wing section 60 will be driven to rotate thereby causing the aircraft 100 to enter rotary-wing mode. The propellers 12 may be feathered or otherwise controlled to provide effective thrust when counter-rotated. Jet engines may also be equipped with a reverse-thrust feature.

In embodiments where the wing section 60 is driven to rotate relative to the main body 20 by the reversal of thrust of one propulsion unit 14, the wing members 16 may not invert. Instead, lift may be maintained on the wing member 16b essentially travelling in reverse (i.e. the trailing edge of the wing member 16b is colliding with the airflow before the leading edge) by modifying the shape of the wing member 16b. This may be achieved as described with reference to Figures 8a and 8b.

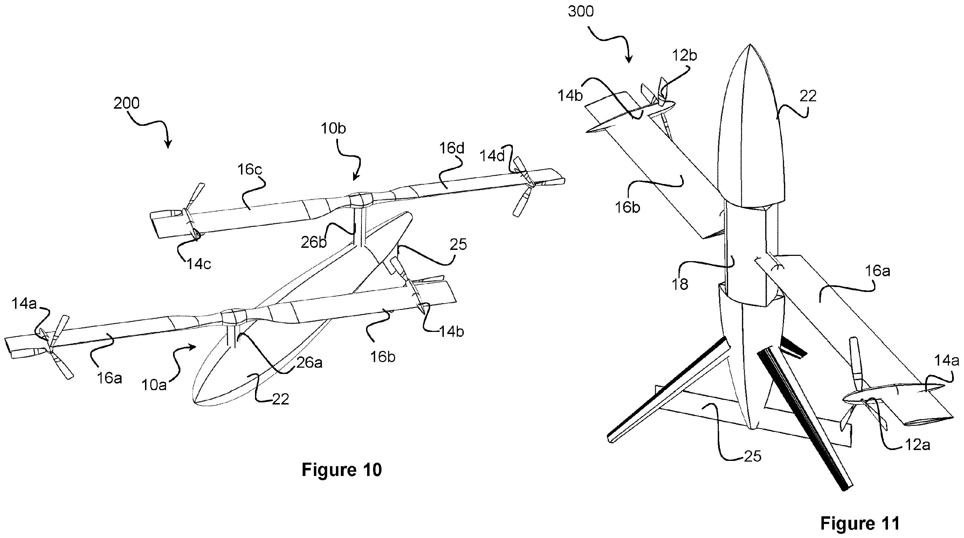

Figure 10 illustrates an aircraft 200 according to an alternative embodiment. Here, the aircraft 200 comprises two sets of wing members 16a, 16b and 16c, 16d (i.e. two wing sections 10a, 10b) spaced apart along the longitudinal axis of the fuselage 22. The wing sections 10a, 10b are respectively coupled to the fuselage 22 by independently rotatable rotor masts 26a, 26b. In the rotary-wing mode, the two wing sections 10a, 10b are arranged to counter-rotate relative to each other. The wing members 16a, 16b, 16c, 16d may intermesh with each other when they rotate. The use of two counter-rotating wing sections 10a, 10b eliminates the need for an anti-torque device 24, as one of the wing sections 10a counters the torque induced by the other wing section 10b.

In fixed-wing mode, all four wing members 16a, 16b, 16c, 16d are arranged such that their leading edges face towards the front of the aircraft 200. Forward linear thrust is provided by the propulsion units 14a-d coupled to the wing members 16.

Another alternative embodiment of an aircraft 300 is illustrated in Figure 11. Here, the aircraft 300 is arranged to take-off with the longitudinal axis of the fuselage 22 arranged vertically. The aircraft 300 sits on the ground on its tail 25.

Here, the rotor hub 18 is a collar arranged co-axially with the fuselage 22. The rotor hub 18 is driven to rotate about the longitudinal axis of the fuselage 22 in rotary wing mode, and is locked in place for fixed-wing mode. The rotor hub 18 may be driven to rotate by a motor within the fuselage 22, or in an alternative embodiment by the propulsion units 14 on the ends of the wing members 16.

To transition to fixed-wing mode, the wing members 16 are driven to rotate by the actuators 182 to such that their horizontal plane aligns parallel with the horizontal plane of the fuselage 22.

It will be appreciated that relative terms such as horizontal and vertical, top and bottom, above and below, front and back, and so on, are used above merely for ease of reference to the Figures, and these terms are not limiting as such, and any two differing directions or positions and so on may be implemented rather than truly horizontal and vertical, top and bottom, and so on. For example, when the aircraft 100 shown in Figure 1 is in inverted flight, the tail fins will be arranged at the "top" of the fuselage 22 while the wing section 10 will be "below" the fuselage 22, contrary to as described above. However, the point remains that relatively they are on opposite sides of the fuselage 22 to each other.

It will be appreciated that features described in relation to one aspect of the present disclosure can be incorporated into other aspects of the present disclosure. For example, an apparatus of the disclosure can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments. Singular references do not exclude a plurality; thus, references to 'a', `an', 'first', 'second', etc. do not preclude a plurality.

## Claims

1. An air vehicle comprising:
a fuselage;
a wing body and a pair of opposing wing members extending substantially laterally from the wing body;
a stabiliser for generating force that, in use, counteracts torque exerted on the fuselage by the rotating wing body;
a rotor mast for coupling the wing body to an upper side of the fuselage, wherein in a first configuration of the air vehicle the rotor mast is locked such that the wing body does not rotate relative to the fuselage and in a second configuration of the air vehicle the rotor mast is unlocked such that the wing body rotates relative to the fuselage; and
propulsion means for providing linear thrust in the first configuration and for providing rotary thrust in the second configuration.

2. The air vehicle according to claim 1, wherein the propulsion means comprises a motor for driving the rotor mast to rotate when the air vehicle is in the second configuration, and at least one motor for driving the air vehicle forward in flight when the air vehicle is in the first configuration.

3. The air vehicle according to claim 1, wherein the propulsion means comprises a first propulsion device fixed to a first one of said pair of wing members and a second propulsion device fixed to a second one of said pair of wing members, wherein in the first configuration the first and second propulsion devices provide thrust in the same direction as each other, and wherein in the second configuration the first propulsion device provides thrust in the opposite direction to the second propulsion device causing the wing body to rotate relative to the fuselage.

4. The air vehicle according to claim 3, wherein the first propulsion device comprises a reverse thrust mode, and wherein in the second configuration of the air vehicle the first propulsion device is configured to operate in the reverse thrust mode such that it provides thrust in the opposite direction to the second propulsion device.

5. The air vehicle according to claim 4, wherein the propulsion devices comprise a propeller, and wherein the reverse thrust mode comprises reversing the direction of rotation of the propeller.

6. The air vehicle according to any one of the preceding claims, wherein at least one of the pair of wing members is arranged to rotate relative to the wing body about its central axis, such that in the second configuration of the air vehicle the leading edges of the pair of wing members face in substantially opposite directions.

7. The air vehicle according to claim 6, wherein the first one of the pair of wing members is rotated about its central axis to provide a different angle of attack to that of the second one of the pair of wing members, such that the first one of the pair of wing members provides lift in the same direction as the second one of the pair of wing members when inverted for the second configuration.

8. The air vehicle according to any one of claims 1 to 6, wherein the profile of a first one of the pair of wing members is configured to transition from a first shape when the air vehicle is in the first configuration to a second shape when the air vehicle is in the second configuration, such that both wing members generate lift in the same direction in the first configuration and in the second configuration.

9. The air vehicle according to claim 8, wherein the first one of the pair of wing members comprises a metamorphic skin structure.

10. The air vehicle according to any one of the preceding claims, wherein the stabiliser is arranged to generate thrust along the lateral axis of the fuselage.

11. The air vehicle according to claim 3 or any one of claims 4 to 9 when dependent on claim 3, wherein the stabiliser comprises a motor arranged to drive the fuselage to rotate relative to the wing body to counter the rotation of the wing body when the wing body is driven to rotate by the first and second propulsion devices.

12. The air vehicle according to any one of the preceding claims, comprising at least one tail fin extending away from the lower side of the fuselage.

13. The air vehicle according to any one of the preceding claims, wherein the pair of wing members are arranged to pivot simultaneously about their longitudinal axes to increase lift when the air vehicle transitions from the first configuration to the second configuration.

14. The air vehicle according to any one of the preceding claims, wherein the air vehicle is an unmanned aerial vehicle.

15. A method of controlling an air vehicle according to any one of the preceding claims to transition from fixed-wing mode to rotary-wing mode, comprising:
rotating both wing members upwards such that they are arranged orthogonal to the horizontal plane of the air vehicle;
further rotating one of the pair of wing members backwards such that its leading edge faces away from the front of the fuselage, and returning the other one of the pair of wing members back to its original position such that the propulsion devices provide thrust in opposite directions; and
activating the stabiliser.
